(19) Europäisches Patentamt
European Patent Office
Office européen des brevets

(11) Numéro de publication: **0 195 714**
**B1**

(12) # FASCICULE DE BREVET EUROPÉEN

(45) Date de publication du fascicule du brevet: **14.12.88**

(51) Int. Cl.⁴: **C 08 F 220/24**, C 08 F 220/28

(21) Numéro de dépôt: **86400531.9**

(22) Date de dépôt: **12.03.86**

(54) **Copolymères fluorés et leur application au traitement hydrophobe et oléophobe de substrats divers.**

(30) Priorité: **20.03.85 FR 8504102**

(43) Date de publication de la demande: **24.09.86 Bulletin 86/39**

(45) Mention de la délivrance du brevet: **14.12.88 Bulletin 88/50**

(84) Etats contractants désignés: **AT BE CH DE FR GB IT LI LU NL SE**

(56) Documents cité:
**DE-A-2 358 647**
**FR-A-2 277 840**
**GB-A-1 123 829**
**US-A-3 654 244**
**US-A-4 127 711**

(73) Titulaire: **ATOCHEM, 4 & 8, Cours Michelet La Défense 10, F-92800 Puteaux (FR)**

(72) Inventeur: **Dessaint, André, 17 B, rue des Racques, Boulincourt 60600 Clermont (FR)**
Inventeur: **Lina, Marie- José "Les Jonquières", 6, rue Boyer, F-69160 Tassin la Demi- Lune (FR)**

(74) Mandataire: **Leboulenger, Jean, ATOCHEM Département Propriété Industrielle, F-92091 Paris la Défense 10 Cédex 42 (FR)**



Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invéntion a pour objet de nouveaux copolymères fluorés et leur utilisation pour le traitement hydrophobe et oléophobe de substrats divers tels que papier, textiles, bois, nontissés, métaux, béton, matières plastiques et, plus particulièrement, cuirs.

Comme produits plus spécialement adaptés aux cuirs, il a été proposé des complexes de chrome d'acides carboxyliques fluorés (brevets US-2 934 450 - 3 651 105 - 3 907 576 et 574 518). Bien que conférant effectivement de bonnes propriétés, ces complexes présentent l'inconvénient d'être fortement colorés en vert et de communiquer cette couleur aux substrats sur lesquels ils sont appliqués, limitant ainsi leur emploi.

Ont aussi été proposés des polymères ou copolymères d'acrylates fluorés (brevet US-3 524 760) et des carbamates ou dicarbamates d'alcools fluorocarbonés (brevet US-3 657 320). Cependant, ces produits qui nécessitent l'emploi d'un solvant organique, très souvent halogéné, doivent être mis en oeuvre en observant certaines précautions pour ne pas nuire à l'environnement.

Sont également connus des acides carboxyliques fluorés (brevet US-3 382 097) et des acides polyfluoroalkylthio-dicarboxyliques (brevet US-3 471 518). Toutefois, les propriétés d'hydrophobie et/ou d'oléophobie conférées aux cuirs par ces produits restent faibles.

Des copolymères fluorés, dérivés d'un acrylate ou méthacrylate de monoéther de polyalkylèneglycol et plus spécialement destinés au traitement antisalissure des textiles, ont déjà fait l'objet du brevet US-3 654 244. Cependant, parmi les monomères utilisés, ceux qui ne contiennent qu'un ou deux motifs d'oxyde d'éthylène tels que $CH_2=CH\text{-}COO\text{-}CH_2CH_2O\text{-}C_2H_5$ et $CH_2=C(CH)\text{-}COO\text{-}(CH_2CH_2O)\text{-}CH_3$ conduisent à des copolymères insolubles dans l'isopropanol ou les mélanges eau-isopropanol particulièrement recommandés pour le traitement des cuirs. Quant aux monomères contenant sept motifs d'oxyde d'éthylène ou plus, ils conduisent à des copolymères dont les performances sur cuir sont médiocres.

Il a maintenant été trouvé, dans les services de la demanderesse, de nouveaux produits fluorés qui, appliqués sur cuirs, leur confèrent d'excellentes propriétés hydrophobes et oléophobes sans en affecter le coloris, l'aspect, le toucher et la main. Ces produits sont en outre d'un emploi très facile et ne présentent aucun risque pour l'environnement.

Les produits selon l'invention sont des copolymères qui comprennent en poids:

(a) 30 à 70 % d'un ou plusieurs monomères polyfluorés de formule générale:

$$R_f - B - Q - \overset{\overset{\displaystyle O}{\|}}{C} - \underset{\underset{\displaystyle R}{|}}{C} = CH - R \qquad (I)$$

dans laquelle $R_f$ représente un radical perfluoré à chaîne droite ou ramifiée, contenant 2 à 20 atomes de carbone, de préférence 4 à 16 atomes de carbone, Q représente un atome d'oxygène ou de soufre, B représente un enchaînement bivalent lié à Q par un carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone;

(b) 10 à 50 % d'un ou plusieurs monomères de formule générale:

$$H_2C = \underset{\underset{\displaystyle R_1}{|}}{C} - \overset{\overset{\displaystyle O}{\|}}{C} - O\,[C_nH_{2n}O]_3 - R_2 \qquad (II)$$

dans laquelle $R_1$ représente un atome d'hydrogène ou un radical méthyle, $R_2$ représente un radical alkyle contenant 1 à 4 atomes de carbone, n est égal à 2 ou 3; et éventuellement

(c) jusqu'à 40 % d'un ou plusieurs monomères quelconques autres que ceux de formules (I) et (II).

Comme monomères polyfluorés de formule (I), on préfère ceux répondant à la formule:

$$R_f - (CH_2)_p - O - \overset{\overset{\displaystyle O}{\|}}{C} - \underset{\underset{\displaystyle R}{|}}{C} = CH - R \qquad (III)$$

dans laquelle $R_f$ et R ont les mêmes significations que ci-dessus, p représente un nombre entier allant de 1 à 20, de préférence égal à 2 ou 4. Ces monomères peuvent être préparés suivant des procédés connus, par

exemple par estérification des alcools correspondants de formule:

$$R_f - (CH_2)_p - OH \qquad (IV)$$

au moyen d'un acide alcène-monocarboxylique de formule:

$$HOOC - \underset{\substack{|\\ R}}{C} = CH - R \qquad (V)$$

tel que, par exemple, l'acide acrylique, l'acide méthacrylique et l'acide crotonique, en présence de catalyseurs acides comme l'acide sulfurique ou l'acide p-toluènesulfonique. Au lieu des acides alcène-monocarboxyliques de formule (V), on peut également utiliser leurs esters, anhydrides ou halogénures. Pour des raisons économiques et pratiques, il s'est avéré particulièrement intéressant d'utiliser un mélange de monomères de formule (III) présentant des radicaux $R_f$ différents.

Comme autres exemples de monomères polyfluorés de formule (I), on peut citer les esters des acides de formule (V) avec les alcools et les thiols de formules:

$$R_f - (CH_2)_p - SO_2 - \underset{\substack{|\\ R_3}}{N} - (CXX')_q - \overset{\substack{Y\\ |}}{\underset{\substack{|\\ Y'}}{C}} - OH \qquad (VI)$$

$$R_f - (CH_2)_p - SH \qquad (VII)$$

$$R_f - (CH_2)_p - O - (CH_2)_r - OH \qquad (VIII)$$

$$R_f - (CH_2)_p - S - (CH_2)_r - OH \qquad (IX)$$

$$R_f - (CH_2)_p - (OCH_2CH_2)_r - OH \qquad (X)$$

$$R_f - (CH_2)_p - SO_2 - (CH_2)_r - OH \qquad (XI)$$

$$R_f - CH = CH - (CH_2)_p - OH \qquad (XII)$$

$$R_f - SO_2 - \underset{\substack{|\\ R_4}}{N} - (CH_2)_p - OH \qquad (XIII)$$

$$R_f - COO - (CH_2)_p - OH \qquad (XIV)$$

$$R_f - CO - \underset{\substack{|\\ R_4}}{N} - (CH_2)_p - OH \qquad (XV)$$

dans lesquelles $R_f$ et p ont les mêmes significations que ci-dessus, $R_3$ représente un atome d'hydrogène ou un radical alkyle contenant 1 à 10 atomes de carbone (de préférence méthyle), $R_4$ représente un atome d'hydrogène ou un radical alkyle contenant 1 à 4 atomes de carbone, q est un nombre entier allant de 1 à 4 (de préférence 1 ou 2), r est un nombre entier allant de 1 à 20 (de préférence 1 à 4), X, X', Y et Y' sont identiques ou différents et représentent chacun un atome d'hydrogène ou un radical alkyle contenant 1 à 4 atomes de carbone.

Comme exemples de monomères de formule (II), on peut citer plus particulièrement les acrylates et méthacrylates d'éthers méthyliques ou éthyliques du triéthylèneglycol ou du tripropylèneglycol. D'une façon générale, les monomères de formule (II) peuvent être obtenus de manière connue en soi par estérification des éthers-alcools correspondants de formule:

$$HO - [C_nH_{2n}O]_3 - R_2$$

au moyen de l'acide acrylique ou méthacrylique ou d'un dérivé de cet acide.

Comme autres monomères (c) pouvant éventuellement être utilisés dans le cadre de la présente invention, on peut citer:

- les hydrocarbures oléfiniques inférieurs, halogénés ou non, tels que l'éthylène, le propylène, l'isobutène, le chloro-3 isobutène-1, le butadiène, l'isoprène, les chloro- et dichloro-butadiènes, les fluoro- et difluoro-butadiènes, le diméthyl-2,5 hexadiène-1,5, le diisobutylène;
- les halogénures de vinyle, d'allyle ou de vinylidène tels que le chlorure de vinyle ou de vinylidène, le fluorure de vinyle ou de vinylidène, le bromure d'allyle, le chlorure de méthallyle;
- le styrène et ses dérivés, tels que le vinyl-toluène, l'α-méthyl-styrène, l'α-cyanométhyl-styrène, le divinyl-benzène, le N-vinyl carbazole;
- les esters vinyliques tels que l'acétate de vinyle, le propionate de vinyle, les esters vinyliques des acides connus sur le marché sous le nom de "Versatic acids", l'isobutyrate de vinyle, le sénécioate de vinyle, le succinate de vinyle, l'isodécanoate de vinyle, le stéarate de vinyle, le carbonate de divinyle;
- les esters d'allyle comme l'acétate d'allyle et l'heptanoate d'allyle;
- les éthers alkyl-vinyliques ou alkyl-allyliques, halogénés ou non, tels que le cétyl vinyl éther, le dodécyl vinyl éther, l'isobutyl vinyl éther, l'éthyl vinyl éther, le chloro-2 éthyl vinyl éther, le tétra allyloxy éthane;
- les vinyl alkyl cétones comme la vinyl méthyl cétone;
- les acides insaturés, tels que les acides acrylique, méthacrylique, α-chloro-acrylique, crotonique, maléique, fumarique, itaconique, citraconique et sénécioïque, leurs anhydrides et leurs esters comme les acrylates et méthacrylates de vinyle, d'allyle, de méthyle, de butyle, d'isobutyle, d'hexyle, d'heptyle, d'éthyl-2 hexyle, de cyclohexyle, de lauryle, de stéaryle ou d'isocyanato-2 éthyle, le maléate de diméthyle, le crotonate d'éthyle, le maléate acide de méthyle, l'itaconate acide de butyle, les diacrylates et diméthacrylates de glycol ou de polyalkylène glycol, comme le diméthacrylate d'éthylène glycol ou de triéthylène glycol, les acrylates et méthacrylates de dichloro-phosphato alkyle comme le méthacrylate de dichloro-phosphato éthyle, ainsi que le phosphate acide de bis (méthacryloyloxy éthyle) et le méthacryloyloxypropyltriméthoxy-silane;
- l'acrylonitrile, le méthacrylonitrile, le chloro-2 acrylonitrile, l'acrylate ou méthacrylate de cyano-2 éthyle, le méthylène glutaronitrile, le cyanure de vinylidène, les cyanoacrylates d'alkyle comme le cyanoacrylate d'isopropyle, la trisacryloyl hexahydro-s-triazine, le vinyl trichlorosilane, le vinyl triméthoxysilane, le vinyl triéthoxysilane, la N-vinyl-pyrrolidone-2.

Peuvent également être utilisés comme monomères éventuels (c), des composés possédant au moins une liaison éthylénique et au moins un groupe réactif, c'est-à-dire un groupe capable de réagir avec un autre monomère, un autre composé, ou le substrat lui-même pour établir une réticulation. Ces groupes réactifs sont bien connus et peuvent être des groupes polaires ou des groupes fonctionnels comme les groupes OH, $NH_2$, NH-alkyl, COOMe (Me = métal alcalin ou alcalino-terreux),

$SO_3H$, 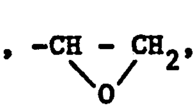, CHO, 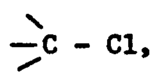, 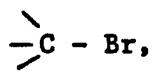, $-SO_2-CH=CH_2$,

$-NH-CO-CH_2=CH_2$. Comme monomères de ce type on peut citer les acrylates et méthacrylates hydroxyalkyliques comme le monoacrylate d'éthylène glycol, le monométhacrylate de propylène glycol, les acrylates et méthacrylates de polyalkylène glycols, l'alcool allylique, l'allyl glycolate, l'isobutènediol, l'allyloxy éthanol, l'o. allyl phénol, le divinyl carbinol, le glycérol α-allyléther, l'acrylamide, le méthacrylamide, les maléamide et maléïmide, le N-(cyano-éthyl)-acrylamide, le N-isopropyl-acrylamide, le diacétone-acrylamide, les N-(hydroxy-méthyl) acrylamide et méthacrylamide, les N-(alcoxyméthyl) acrylamides et méthacrylamides, le glyoxal bisacrylamide, l'acrylate ou méthacrylate de sodium, les acides vinylsulfonique et styrène-p-sulfonique et leurs sels alcalins, l'amino-3 crotononitrile, la monoallyl amine, les vinyl-pyridines, l'acrylate ou méthacrylate de glycidyle, l'allyl glycidyl éther, l'acroléine, le méthacrylate de N,N-diméthylaminoéthyle ou de N-tertiobutylaminoéthyle.

Parmi les comonomères (c) précités, on préfère les suivants: acétate de vinyle, acide acrylique ou méthacrylique, anhydride maléique, acrylate ou méthacrylate d'alkyle, diacrylate ou diméthacrylate d'éthylèneglycol ou de triéthylèneglycol, N-vinyl-pyrrolidone-2, monoacrylate ou méthacrylate d'éthylèneglycol ou de propylèneglycol, acrylamide, méthacrylamide, N-méthylol-acrylamide ou méthacrylamide, méthacrylate de N,N-diméthyl-aminoéthyle ou de N-tertiobutylaminoéthyle.

Les produits selon l'invention sont préparés de façon connue en soi par copolymérisation des monomères en solution dans un solvant organique ou dans un mélange de solvants organiques tels que, par exemple, l'acétone, la méthyl éthyl cétone, la γ-butyrolactone, la méthyl cyclohexanone, la N-méthyl pyrrolidone-2, le méthanol, l'éthanol, l'alcool isopropylique, le butanol, l'éthylène glycol, le propylène glycol, le diacétone alcool, le phénylméthylcarbinol, l'isophorone, le tétrahydrofurane, le dioxane, l'acétate d'éthyle, l'acétate de glycol, l'éthylène ou polyéthylène glycol monométhyl ou monoalkyléther, le propylène ou polypropylène glycol monométhyl ou monoalkyl éther, le formamide, le diméthylformamide, l'acétonitrile, le toluène, le trifluorotoluène, le trichlorotrifluoroéthane. Préférentiellement on utilise des solvants miscibles à l'eau comme l'acétone, l'alcool éthylique ou isopropylique, les monoalkyl éthers de polyéthylène ou polypropylène glycol.

On opère en présence de catalyseurs de polymérisation appropriés comme, par exemple, le peroxyde de benzoyle, le peroxyde de lauroyle, le peroxyde d'acétyle, le peroxyde de succinyle, l'azo-2,2' bis-isobutyronitrile, l'azo-2,2' bis-(diméthyl-2,4 méthoxy-4 valéronitrile), l'acide azo-4,4' bis-(cyano-4 pentanoïque), l'azodicarbonamide, le perpivalate de tert-butyle. La quantité de catalyseur à mettre en oeuvre peut varier

entre 0,01 et 5 %, de préférence de 0,1 à 2 %, par rapport au poids total des monomères engagés.

On peut également opérer en utilisant une source de rayonnement U.V. en présence de photo-initiateurs tels que la benzophénone, la méthyl-2 anthraquinone ou la chloro-2 thioxanthone.

La température de réaction peut varier dans de larges limites, c'est-à-dire entre la température ambiante et le point d'ébullition du mélange réactionnel. Préférentiellement on opère entre 50 et 90°C.

Si on désire régler le poids moléculaire des copolymères, il est possible d'utliser des agents de transfert de chaîne tels que les alkylmercaptans, comme le tertio-dodécylmercaptan, le n.dodécylmercaptan, le n.octylmercaptan, le tétrachlorure de carbone, le triphénylméthane. Les quantités à mettre en oeuvre qui sont fonction des valeurs que l'on veut obtenir pour le poids moléculaire, peuvent varier de 0,01 % à 3 % par rapport au poids total des monomères et préférentiellement entre 0,05 % et 0,5 %.

La solution de copolymère obtenue peut éventuellement être diluée avec le solvant de copolymérisation ou, sous réserve de miscibilité réciproque, avec un autre solvant, de l'eau ou un mélange d'un solvant et d'eau. Si on le désire, on peut également isoler le copolymère par élimination du ou des solvants.

Comme substrats susceptibles d'être rendus oléophobes et hydrophobes avec les produits selon l'invention, on peut citer principalement les cuirs. On peut mentionner également d'autres matériaux trés divers tels que, par exemple, les papiers, les article tissés ou non tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, les matières plastiques, le verre, le bois, les métaux, la porcelaine, la maçonnerie, les surfaces peintes. Les produits selon l'invention peuvent aussi être incorporés dans des formulations cosmétiques, par exemple dans des laques pour cheveux.

Dans le cas des cuirs, les solutions de copolymères selon l'invention sont appliquées principalement en milieu alcoolique, hydroalcoolique ou aqueux, suivant des techniques bien connues, par exemple, par pulvérisation, par traitement en plein bain dans un foulon ou une coudreuse, ou encore par enduction à la brosse.

Les supports traités avec les copolymères selon l'invention présentent de bonnes propriétés oléophobes et hydrophobes après un simple séchage à température ambiante ou à une température plus élevée qui varie avec le type de support, mais peut aller jusqu'à 250°C. Les cuirs sont préférentiellement séchés à la température ambiante ou à une température modérée allant jusqu'à environ 60°C.

Pour obtenir un effet particulier ou une meilleure fixation, il peut être parfois avantageux sur certains supports d'associer les copolymères selon l'invention à certains adjuvants, polymères, produits thermocondensables et catalyseurs.

La quantité de copolymère à mettre en oeuvre varie avec la nature du support à traiter et avec la teneur en fluor du copolymère. Sur cuir, cette quantité est généralement comprise entre 0,2 et 5 g par $m^2$, de préférence entre 0,5 et 2,5 $g/m^2$. Ainsi traités, tous les types de cuirs, tannés avec des sels de chrome ou des tannins végétaux, présentent de bonnes propriétés hydrophobes et oléophobes.

Pour évaluer les performances des substrats traités selon l'invention, la demanderesse a utilisé les tests suivants:

**Test de résistance à l'eau (R E)**

Le test consiste à mesurer le temps de pénétration d'une goutte d'eau déposée sur le substrat. Si le temps de pénétration excède deux heures, cette résistance est jugée excellente.

**Test de résistance à l'huile (R H)**

Le test consiste à mesurer le temps de pénétration d'une goutte d'huile de vaseline déposée sur le substrat. Si le temps de pénétration excède deux heures, cette résistance est jugée excellente.

**Test d'hydrophobie (H)**

Sur certains supports, l'effet hydrophobe a été mesuré à l'aide de solutions-test numérotées de 1 à 10 et constituées par des mélanges eau/isopropanol dans les proportions pondérales suivantes:

| Solution-test | Eau | Isopropanol |
|---|---|---|
| 1 | 90 | 10 |
| 2 | 80 | 20 |
| 3 | 70 | 30 |
| 4 | 60 | 40 |
| 5 | 50 | 50 |
| 6 | 40 | 60 |
| 7 | 30 | 70 |
| 8 | 20 | 80 |
| 9 | 10 | 90 |
| 10 | 0 | 100 |

Le test consiste à déposer sur les substrats traités des gouttes de ces mélanges, puis à observer l'effet produit. On cote en donnant pour valeur, le numéro correspondant à la solution qui contient le plus fort pourcentage d'isopropanol et qui n'a pas pénétré ou mouillé le substrat après 30 secondes de contact.

Le pouvoir répulsif des supports traités, vis-à-vis des huiles (OR) et de l'eau (ST) a été mesuré suivant les normes AATCC 118-1975 (Oil Repellency: hydrocarbon resistance test) et AATCC 22-1975 (Water repellency: Spray-test). Sur cuir, le pouvoir répulsif vis-à-vis de l'eau (spray-test) a été déterminé de la façon suivante: Après que la totalité de l'eau ait coulé sur la surface du cuir, on pose ce dernier à plat et on le recouvre d'une feuille de papier buvard; on exerce alors sur l'ensemble une pression en faisant effectuer un aller et retour à un rouleau métallique d'un poids de 2 kg. On cote ensuite en fonction des taches formées par l'eau qui mouille le cuir et suivant les valeurs indiquées dans le tableau d'évaluation de la norme AATCC 22-1975.

Pour évaluer les performances de papiers traités selon l'invention, la demanderesse a également utilisé les test suivants:

### Test à l'essence de térébenthine

Ce test est décrit dans Tappi, norme T 454, ts 66 (1966). Sur le papier à tester, lui-même placé sur un bristol blanc, on dépose 5 g de sable de Fontainebleau lavé aux acides, puis on verse sur le sable 1,1 ml d'essence de térébenthine anhydre et colorée par 0,5 g par litre de Rouge Organol B S. Quand l'essence est finie de verser, on déclenche un chronomètre et déplace le papier toutes les 30 secondes sur le bristol. On note le temps écoulé au moment où le bristol se tache. Au-delà de 30 minutes, on peut admettre que le test n'est plus significatif et que le substrat testé présente d'excellentes performances. L'essai est effectué sur 7 échantillons du même papier. On note les valeurs trouvées de la plus petite à plus grande et on considère que la quatrième valeur est la valeur moyenne.

### Test d'ingraissabilité ou "Kit value"

Ce test décrit dans Tappi, vol. 50, n° 10, pages 152 A et 153 A, norme RC 338 et UM 511, permet de mesurer l'ingraissabilité des substrats par des mélanges d'huile de ricin, de toluène et d'heptane en proportions variables.

| Nombre Kit (Kit value) | Volume d'huile de ricin | Volume de toluène | Volume d'heptane |
|---|---|---|---|
| 1 | 200 | 0 | 0 |
| 2 | 180 | 10 | 10 |
| 3 | 160 | 20 | 20 |
| 4 | 140 | 30 | 30 |
| 5 | 120 | 40 | 40 |
| 6 | 100 | 50 | 50 |
| 7 | 80 | 60 | 60 |
| 8 | 60 | 70 | 70 |
| 9 | 40 | 80 | 80 |
| 10 | 20 | 90 | 90 |
| 11 | 0 | 100 | 100 |
| 12 | 0 | 90 | 110 |

Le test consiste à déposer doucement sur le papier traité des gouttes de ces mélanges. On laisse les gouttes sur le papier durant 15 secondes, puis on observe soigneusement l'aspect des papiers ou cartons et on note le mouillage ou la pénétration mis en évidence par un brunissement de la surface. Le nombre correspondant au

mélange contenant le pourcentage le plus élevé d'heptane, qui ne pénètre pas ou ne mouille pas le papier, est la "kit value" du papier et est considéré comme étant le taux d'oléophobie du papier traité. Plus la "kit value" est élevée, meilleure est l'oléophobie du papier.

Les exemples suivants dans lesquels les parties et les pourcentages s'entendent en poids, sauf mention contraire, illustrent l'invention.

**Exemple 1**

Dans un réacteur d'une capacité de 250 parties en volume, muni d'un agitateur, d'un réfrigérant à reflux, d'un thermomètre, d'une arrivée d'azote et d'un dispositif de chauffage, on charge 60 parties d'alcool isopropylique, 25 parties de méthacrylate de l'éther méthylique du triéthylèneglycol et 25 parties d'un mélange de monomères polyfluorés de formule:

$$\begin{array}{l} \qquad\qquad\qquad\qquad\qquad\quad O \\ \qquad\qquad\qquad\qquad\qquad\quad \| \\ CF_3 - (CF_2)_n - C_2H_4 - O - C - C = CH_2 \\ \qquad\qquad\qquad\qquad\qquad\qquad\quad | \\ \qquad\qquad\qquad\qquad\qquad\qquad CH_3 \end{array}$$

où n est égal à 5, 7, 9, 11, 13 et 15 dans les rapports en poids moyens et respectifs de 1 : 56 : 22 : 9 : 3 : 3. On chasse l'air du réacteur par un courant d'azote pendant 15 minutes et porte la température à 80°C. On ajoute alors 0,5 parties d'acide azo-4, 4' bis-(cyano-4 pentanoïque) et on maintient à 80°C pendant 4 heures en ajoutant chaque heure, 0,1 partie de perpivalate de t-butyle. On dilue ensuite avec 25 parties d'eau et 25 parties d'isopropanol avant de refroidir à température ambiante. On obtient ainsi une solution (S 1) d'un copolymère selon l'invention. Cette solution contient 30,5 % de matières non volatiles et son taux de fluor est de 9,4 %.

2 grammes de cette solution sont diluées jusqu'à 100 à l'aide d'un mélange 50/50 d'eau et d'isopropanol. Cette nouvelle solution (S 1d) est appliquée par pulvérisation sur un cuir vachette pleine fleur tannée au chrome, à raison de 200 g/$m^2$ et on laisse sécher pendant quatre heures à température ambiante avant de procéder à l'examen des performances obtenues. Comparativement à un cuir non traité, les résultats obtenus sont indiqués dans le tableau suivant:

| | Vachette pleine fleur tannée au chrome | |
|---|---|---|
| Caractéristiques | Traitée | Non traitée |
| Résistance à l'eau (RE) | supérieure à 2 heures | 25 secondes |
| Résistance à l'huile (RH) | supérieure à 2 heures | 105 secondes |
| Pouvoir répulsif vis-à-vis de l'huile (OR) AATCC 118-1975 | 3 | 0 |
| Pouvoir répulsif vis-à-vis de l'eau (ST) Spraytest AATCC 22-1975 | 100 | 0 |

**Exemple 2**

Dans un appareillage identique à celui de l'exemple 1, on charge 60 parties d'alcool isopropylique, 16,25 parties de méthacrylate de l'éther méthylique du triéthylèneglycol, 1,25 partie d'acide acrylique et 32,5 parties du même mélange de monomères polyfluorés qu'à l'exemple 1. On chasse l'air du réacteur par un courant d'azote pendant 15 minutes et porte la température à 80°C. On ajoute alors 0,5 parties d'acide azo-4, 4'bis-(cyano-4 pentanoïque) et maintient à 80°C pendant 4 heures, en ajoutant chaque heure 0,1 partie de perpivalate de t-butyle. On dilue ensuite avec une solution composée de 25 parties d'eau, 25 parties d'alcool isopropylique et 0,8 parties d'hydroxyde de potassium, avant de refroidir à température ambiante. On obtient ainsi une solution (S 2) d'un copolymère selon l'invention. Cette solution qui contient 30,6 de matières non volatiles et dont le taux de fluor est de 12,1 %, est appliquée sur un papier non collé dont les caractéristiques sont les suivantes:

- Composition fibreuse:
60 % de pâte KRAFT blanchie à base de feuillus
40 % de pâte KRAFT blanchie à base de résineux
- Raffinage à l'hydrafineur 00 jusqu'à 35° SR
- Adjuvants introduits:

. talc: 15 %
. agent de rétention (RETAMINOL E de la Société BAYER): 3 %
- Poids du papier: 70 à 71 $g/m^2$
- Humidité du papier: 4 à 5 %.

A cet effet on prépare un bain pour size-press contenant 0,85 g de fluor par litre, en diluant 7 g de solution S2 avec 993 g d'eau. Une feuille de papier non collé est traitée en size-press dans ce bain avec un taux d'enlevage de 85 %. Aprés séchage pendant 90 secondes à 110°C, on obtient un papier présentant de bonnes propriétés hydrophobes et oléophobes, comme le montrent, comparativement à une feuille de papier non traitée, les résultats figurant dans le tableau suivant.

| Caractéristiques | papier traité | papier non traité |
|---|---|---|
| Oléophobie (Kit-value) | 7 | 0 |
| Test à l'essence de térébenthine | supérieur à 30 minutes | inférieur à 30 secondes |
| Résistance à l'huile (RH) | supérieur à 2 heures | inférieur à 60 secondes |

**Exemple 3**

On opère comme à l'exemple 1, mais en remplaçant le mélange de monomères polyfluorés par la même quantité (25 parties) du monomère de formule:

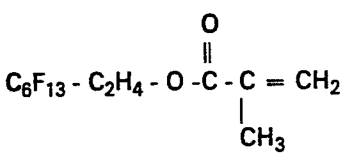

La solution (S3) ainsi obtenue contient 30,8 % de matières non volatiles et son taux de fluor est de 8,8 %.

**Exemple 4**

On opère comme à l'exemple 1, mais en utilisant comme monomères 16,25 parties de méthacrylate de l'éther méthylique du triéthylèneglycol, 1,25 partie de méthacrylate de sulfo-2 éthyle et 32,5 parties du même mélange de monomères polyfluorés qu'à l'exemple 1.

La solution (S4) ainsi obtenue contient 30,9 % de matières non volatiles et son taux de fluor est de 12,4 %.

**Exemple 5**

On opère comme à l'exemple 2, mais en utilisant comme monomères 23,75 parties de méthacrylate de l'éther méthylique du tripropylèneglycol, 1,25 parties d'acide acrylique et 25 parties du même mélange de monomères polyfluorés qu'à l'exemple 1.

La solution (S5) ainsi obtenue contient 30,8 % de matières non volatiles et son taux de fluor est de 9,5 %.

**Exemple 6**

On opère comme à l'exemple 1, mais en utilisant comme monomères 25 parties de méthacrylate de l'éther éthylique du triéthylèneglycol et 25 parties du même mélange de monomères polyfluorés qu'à l'exemple 1.

La solution (S6) ainsi obtenue contient 30,9 % de matières non volatiles et son taux de fluor est de 9,5 %.

**Exemple 7**

On opère comme à l'exemple 1, mais en utilisant comme monomères parties de méthacrylate de l'éther méthylique du triéthylèneglycol, 5 parties de méthacrylate d'isocyanato-2 éthyle et 25 parties du même mélange de monomères polyfluorés qu'à l'exemple 1.

La solution (S7) ainsi obtenue contient 30,8 % de matières non volatiles et son taux de fluor est de 9,5 %.

**Exemple 8**

On opère comme à l'exemple 1, mais en remplaçant le mélange de monomères polyfluorés par la même quantité (25 parties) d'un mélange de monomères polyfluorés de formule:

$$\begin{array}{l} \qquad\qquad\qquad\qquad\qquad\qquad\quad O \\ \qquad\qquad\qquad\qquad\qquad\qquad\quad \| \\ CF_3 - (CF_2) - C_2H_4 - SO_2N - C_2H_4 - O - C - CH = CH_2 \\ \qquad\qquad\qquad\qquad\quad | \\ \qquad\qquad\qquad\qquad\quad CH_3 \end{array}$$

où n est égal à 3, 5, 7, 9, 11, 13 et 15 dans les rapports en poids moyens et respectifs de 1 : 50 : 31 : 10 : 3 : 1 : 1.

La solution (S8) ainsi obtenue contient 31,3 % de matières non volatiles et son taux de fluor est de 7,2 %.

**Exemple 9**

On opère comme à l'exemple 1, mais en utilisant comme monomères 20 parties de méthacrylate de l'éther méthylique du triéthylèneglycol, 5 parties d'acétate de vinyle et 25 parties du même mélange de monomères polyfluorés qu'à l'exemple 1.

La solution (S9) ainsi obtenue contient 30,5 % de matières non volatiles et son taux de fluor est de 9,4 %.

**Exemple 10**

On répète l'exemple 1, mais en utilisant moins (22,5 parties) de méthacrylate d'éther méthylique du triéthylèneglycol et plus (27,5 parties) de monomères polyfluorés.

La solution (S10) ainsi obtenue contient 30,8 % de matières non volatiles et son taux de fluor est de 10,5 %.

**Exemple 11**

On opère comme à l'exemple 2, mais en utilisant comme monomères 20 parties de méthacrylate d'éther méthylique du triéthylèneglycol, 5 parties de méthacrylate de N-tertiobutylaminoéthyle et 25 parties du même mélange de monomères polyfluorés qu'à l'exemple 1.

La solution (S11) ainsi obtenue contient 30,7 % de matières non volatiles et son taux de fluor est de 9,3 %.

**Exemple 12**

On opère comme à l'exemple 2, mais en remplaçant l'acide acrylique par la même quantité (1,25 partie) de méthacrylate de N,N-diméthylaminoéthyle et l'hydroxyde de potassium par 1 partie d'acide acétique.

La solution ainsi obtenue (S12) contient 30,6 % de matières non volatiles et son taux de fluor est de 12,3 %.

**Exemple 13**

On dilue les solutions S3, S4, S5, S6, S7, S8, S9 et S10 avec un mélange 50/50 d'eau et d'isopropanol de façon à obtenir des solutions S3d, S4d, S5d, S6d, S7d, S8d, S9d et S10d contenant chacune 0,19 % de fluor, puis on applique ces solutions diluées sur le même cuir et dans les mêmes conditions qu'à l'exemple 1.

Le tableau de la page 19 dans lequel le signe "++" signifie "supérieur à deux heures" rassemble les

résultats obtenus, comparativement à un cuir non traité.

| Solution de traitement | RE | RH | ST |
|---|---|---|---|
| Néant (cuir non traité) | 25 secondes | 105 secondes | 0 |
| S3d | ++ | ++ | 100 |
| S4d | ++ | ++ | 100 |
| S5d | ++ | ++ | 90 |
| S6d | ++ | ++ | 90 |
| S7d | ++ | ++ | 100 |
| S8d | 90 minutes | ++ | 100 |
| S9d | ++ | ++ | 100 |
| S10d | ++ | ++ | 100 |

**Exemple 14**

En diluant 5,7 g de la solution S12 de l'exemple 12 avec 994,3 g d'eau, on prépare un bain pour size-press contenant 0,7 g de fluor par litre, avec lequel on traite une feuille de papier non collé de mêmes caractéristiques et dans les mêmes conditions qu'à l'exemple 2. On obtient les résultats suivants:

| | papier traité | papier non traité |
|---|---|---|
| Oléophobie (Kit-value) | 8 | 0 |
| Test à l'essence de térébenthine | supérieur à 30 minutes | inférieur à 30 secondes |
| Résistance à l'eau (RE) | supérieur à 2 heures | inférieur à 15 secondes |
| Résistance à l'huile (RH) | supérieur à 2 heures | inférieur à 1 minute |
| Hydrophobie (H) | 9 | 0 |

**Revendications** pout les Etats contractants BE, CH, DE, FR, GB, IT, LI, LU, NL, SE

1. Copolymères fluorés, caractérisés en ce qu'ils comprennent en poids:

a) 30 à 70 % d'un ou plusieurs monomères polyfluorés de formule générale:

$$R_f - B - Q - \overset{\overset{\displaystyle O}{\|}}{C} - \underset{\underset{\displaystyle R}{|}}{C} = CH - R \qquad (I)$$

dans laquelle $R_f$ représente un radical perfluoré à chaîne droite ou ramifiée, contenant 2 à 20 atomes de carbone, Q représente un atome l'oxygène ou de soufre, B représente un enchaînement bivalent lié à Q par un carbone et pouvant comporter un ou plusieurs atomes l'oxygène, de soufre et/ou d'azote, l'un des symboles R représente un atome d'hydrogène et l'autre un atome d'hydrogène ou un radical alkyle contenant 1 à 4 atomes de carbone;

b) 10 à 50 % d'un ou plusieurs monomères de formule générale:

$$H_2C = \underset{\underset{\displaystyle R_1}{|}}{C} - \overset{\overset{\displaystyle O}{\|}}{C} - O\,[C_nH_{2n}O]_3 - R_2 \qquad (II)$$

dans laquelle $R_1$ représente un atome d'hydrogène ou un radical méthyle, $R_2$ représente un radical alkyle contenant 1 à 4 atomes de carbone, n est égal à 2 ou 3; et éventuellement

(c) jusqu'à 40 % d'un ou plusieurs monomères quelconques autres que ceux de formules (I) et (II).

2. Copolymères selon la revendication 1, dans lesquels le ou les monomère(s) polyfluoré(s) répond(ent) à la formule:

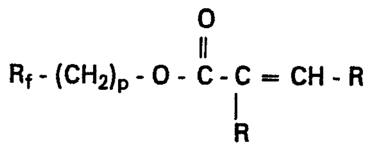

(III)

dans laquelle $R_f$ et R ont les mêmes significations que dans la revendication 1 et p représente un nombre entier allant de 1 à 20, de préférence égal à 2 ou 4.

3. Copolymères selon la revendication 2, obtenus à partir d'un mélange de monomères de formule (III) présentant des radicaux $R_f$ différents.

4. Copolymères selon l'une des revendications 1 à 3, dans lesquels $R_2$ est un radical méthyle ou éthyle.

5. L'application des copolymères selon l'une des revendications 1 à 4 à l'oléofugation et à l'hydrofugation de substrats divers, en particulier des cuirs.

6. Les matériaux et articles traités au moyen d'un copolymère selon l'une des revendications 1 à 4.

**Revendications** pour l'Etat contractant AT

1. Procédé de préparation de produits fluorés, caractérisé en ce qu'on copolymérise en poids:

(a) 30 à 70 % d'un ou plusieurs monomères polyfluorés de formule générale:

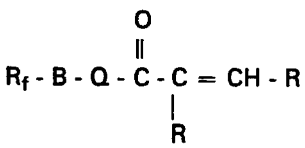

(I)

dans laquelle $R_f$ représente un radical perfluoré à chaîne droite ou ramifiée, contenant 2 à 20 atomes de carbone, Q représente un atome d'oxygène ou de soufre, B représente un enchaînement bivalent lié à Q par un carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone;

(b) 10 à 50 % d'un ou plusieurs monomères de formule générale:

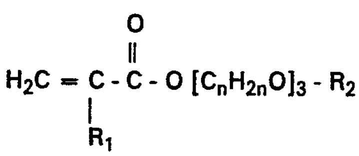

(II)

dans laquelle $R_1$ représente un atome d'hydrogène ou un radical méthyle, $R_2$ représente un radical alkyle contenant 1 à 4 atomes de carbone, n est égal à 2 ou 3; et éventuellement

(c) jusqu'à 40 % d'un ou plusieurs monomères quelconques autres que ceux de formules (I) et (II);

au sein d'un solvant organique et en présence d'un catalyseur de polymérisation et/ou d'un photoinitiateur.

2. Procédé selon la revendication 1, dans lequel le ou les monomère(s) polyfluoré(s) répond(ent) à la formule:

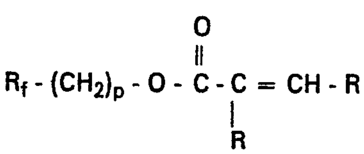

(III)

dans laquelle $R_f$ et R ont les mêmes significations que dans la revendication 1 et p représente un nombre entier allant de 1 à 20, de préférence égal à 2 ou 4.

3. Procédé selon la revendication 2, dans lequel on utilise un mélange de monomères de formule (III) présentant des radicaux $R_f$ différents.

4. Procédé selon l'une des revendications 1 à 3, dans lequel $R_2$ est un radical méthyle ou éthyle.

5. L'application des produits fluorés obtenus par un procédé selon l'une des revendications 1 à 4 à l'oléofugation et à l'hydrofugation de substrats divers, en particulier des cuirs.

6. Les matériaux et articles traités au moyen d'un produit fluoré obtenu par un procédé selon l'une des

revendications 1 à 4.

**Patentansprüche** für die Vertragsstaaten BE, CH, DE, FR, GB, IT, LI, LU, NL, SE

1. Fluorierte Copolymere, dadurch gekennzeichnet, daß sie aus

a) 30 bis 70 Gewichtsprozent eines oder mehrerer mehrfach fluorierter Monomere der allgemeinen Formel

$$R_f - B - Q - \overset{\overset{O}{\|}}{C} - \underset{\underset{R}{|}}{C} = CH - R \qquad (I)$$

in der $R_f$ ein perfluoriertes, verzweigtes oder unverzweigtes Radikal mit 2 bis 20 Kohlenstoffatomen bedeutet, Q ein Sauerstoff- oder Schwefelatom, B ein zweiwertiges Kettenglied, das durch ein Kohlenstoffatom an Q gebunden ist und ein oder mehrere Sauerstoff-, Schwefel- und/oder Stickstoffatome enthalten kann, eines der Symbole R für ein Wasserstoffatom und das andere für ein Wasserstoffatom oder ein Alkylradikal mit 1 bis 4 Kohlenstoffatomen steht;

b) 10 bis 50 Gewichtsprozent eines oder mehrerer Monomere der allgemeinen Formel

$$H_2C = \underset{\underset{R_1}{|}}{C} - \overset{\overset{O}{\|}}{C} - O\,[C_nH_{2n}O]_3 - R_2 \qquad (II)$$

in der $R_1$ ein Wasserstoffatom oder ein Methylradikal darstellt, $R_2$ ein Alkylradikal mit 1 bis 4 Kohlenstoffatomen und n gleich 2 oder 3 ist;

und eventuell

c) bis zu 40 Gewichtsprozent irgendeines oder irgendwelcher anderer Monomere, als denen der Formeln (I) und (II) besteht.

2. Copolymere nach Patentanspruch 1, in denen das oder die mehrfach fluorierten Monomere der Formel

$$R_f - (CH_2)_p - O - \overset{\overset{O}{\|}}{C} - \underset{\underset{R}{|}}{C} = CH - R \qquad (III)$$

genügen, in der $R_f$ und R dieselben Bedeutungen haben, wie in Patentanspruch 1, und p eine ganze zahl zwischen 1 und 20 und vorzugsweise gleich 2 oder 4 ist.

3. Copolymere nach Patentanspruch 2, hergestellt aus einer Mischung von Monomeren der Formel (III) mit unterschiedlichen Radikalen $R_f$.

4. Copolymere nach einem der Patentansprüche 1 bis 3, in denen $R_2$ ein Methyl- oder Ethylradikal ist.

5. Anwendung der Copolymere nach einem der Patentansprüche 1 bis 4 zum Öl- und Wasserfestmachen verschiedener Substrate, insbesondere von Ledern.

6. Materialien und Gegenstände, die mit einem Copolymer nach einem der Patentansprüche 1 bis 4 behandelt worden sind.

**Patentansprüche** für den Vertragsstaayt AT

1. Verfahren zur Herstellung fluorierter Stoffe, dadurch gekennzeichnet, daß

a) 30 bis 70 Gewichtsprozent eines oder mehrerer mehrfach fluorierter Monomere der allgemeinen Formel

$$R_f - B - Q - \overset{\overset{O}{\|}}{C} - \underset{\underset{R}{|}}{C} = CH - R \qquad (I)$$

in der $R_f$ ein perfluoriertes, verzweigtes oder unverzweigtes Radikal mit 2 bis 20 Kohlenstoffatomen bedeutet,

Q ein Sauerstoff- oder Schwefelatom, B ein zweiwertiges Kettenglied, das durch ein Kohlenstoffatom an Q gebunden ist und ein oder mehrere Sauerstoff-, Schwefel- und/oder Stickstoffatome enthalten kann, eines der Symbole R für ein Wasserstoffatom und das andere für ein Wasserstoffatom oder ein Alkylradikal mit 1 bis 4 Kohlenstoffatomen steht;

b) 10 bis 50 Gewichtsprozent eines oder mehrerer Monomere der allgemeinen Formel

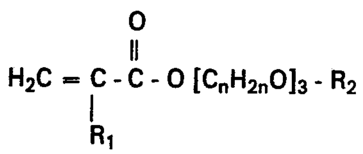

(II)

in der $R_1$ ein Wasserstoffatom oder ein Methylradikal darstellt, $R_2$ ein Alkylradikal mit 1 bis 4 Kohlenstoffatomen und n gleich 2 oder 3 ist;

und eventuell

c) bis zu 40 Gewichtsprozent irgendeines oder irgendwelcher anderer Monomere, als denen der Formeln (I) und (II) in einem organischen Lösungsmittel und in Anwesenheit eines Polymerisationskatalysators und/oder eines Photoinitiators copolymerisiert werden.

2. Verfahren nach Patentanspruch 1, in dem das oder die mehrfach fluorierte(n) Monomer(e) der Formel

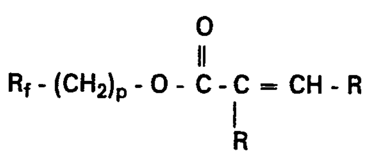

(III)

genügen, in der $R_f$ und R dieselben Bedeutungen haben, wie in Patentanspruch 1, und p eine ganze Zahl zwischen 1 und 20 und vorzugsweise gleich 2 oder 4 ist.

3. Verfahren nach Patentanspruch 2, in dem eine Mischung von Monomeren der Formel (III) mit unterschiedlichen Radikalen $R_f$ verwendet wird.

4. Verfahren nach einem der Patentansprüche 1 bis 3, in dem $R_2$ ein Methyl- oder Ethylradikal ist.

5. Anwendung der durch ein Verfahren nach einem der Patentansprüche 1 bis 4 dargestellten fluorierten Stoffe zum Öl- und Wasserfestmachen verschiedener Substrate, insbesondere von Ledern.

6. Materialien und Gegenstände, die mit einem durch ein Verfahren nach einem der Patentansprüche 1 bis 4 dargestellten fluorierten Stoff behandelt worden sind.

**Claims** for the contracting States BE, CH, DE, FR, GB, IT, LI, LU, NL, SE

1. Fluoro copolymers, characterized in that they comprise, by weight:

(a) 30 to 70 % of one or more polyfluoro monomers of general formula:

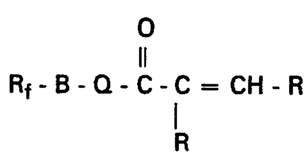

(I)

in which $R^f$ denotes a straight- or branched-chain perfluoro radical containing 2 to 20 carbon atoms, Q denotes an oxygen or sulphur atom, B denotes a divalent chain sequence linked to Q via a carbon and capable of containing one or more oxygen, sulphur and/or nitrogen atoms, one of the symbols R denotes a hydrogen atom and the other a hydrogen atom or an alkyl radical containing 1 to 4 carbon atoms;

(b) 10 to 50 % of one or more monomers of general formula:

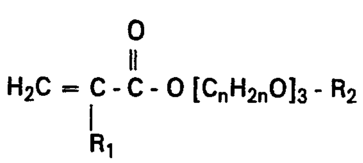

(II)

in which $R^1$ denotes a hydrogen atom or a methyl radical, $R^2$ denotes an alkyl radical containing 1 to 4 carbon atoms, n is equal to 2 or 3; and optionally (c) up to 40 % of any one or more monomers other than those of formulae (I) and (II).

2. Copolymers according to Claim 1, in which the polyfluoro monomer(s) correspond(s) to the formula:

$$R_f - (CH_2)_p - O - \overset{\overset{\displaystyle O}{\|}}{C} - \underset{\underset{\displaystyle R}{|}}{C} = CH - R \qquad (III)$$

in which $R_f$ and R have the same meanings as in Claim 1 and p denotes an integer ranging from 1 to 20, preferably equal to 2 or 4.

3. Copolymers according to Claim 2, obtained from a mixture of monomers of formula (III) containing different $R_f$ radicals.

4. Copolymers according to one of Claims 1 to 3, in which $R_2$ is a methyl or ethyl radical.

5. Application of the copolymers according to one of Claims 1 to 4 to the oilproofing and to the waterproofing of various substrates, especially leathers.

6. Materials and articles treated by means of a copolymer according to one of Claims 1 to 4.

**Claims** for the Contracting state AT

1. Process for the preparation of fluorinated products, characterized in that there are copolymerized, by weight:

(a) 30 to 70 % of one or more polyfluoro monomers of general formula:

$$R_f - B - Q - \overset{\overset{\displaystyle O}{\|}}{C} - \underset{\underset{\displaystyle R}{|}}{C} = CH - R \qquad (I)$$

in which $R_f$ denotes a straight- or branched-chain perfluoro radical containing 2 to 20 carbon atoms, Q denotes an oxygen or sulphur atom, B denotes a divalent chain sequence linked to Q via a carbon and capable of containing one or more oxygen, sulphur and/or nitrogen atoms, one of the symbols R denotes a hydrogen atom and the other a hydrogen atom or an alkyl radical containing 1 to 4 carbon atoms;

(b) 10 to 50 % of one or more monomers of general formula:

$$H_2C = \underset{\underset{\displaystyle R_1}{|}}{C} - \overset{\overset{\displaystyle O}{\|}}{C} - O\,[C_nH_{2n}O]_3 - R_2 \qquad (II)$$

in which $R_1$ denotes a hydrogen atom or a methyl radical, $R_2$ denotes an alkyl radical containing 1 to 4 carbon atoms, n is equal to 2 or 3; and optionally

(c) up to 40 % of any one of more monomers other than those of formulae (I) and (II);

within an organic solvent and in the presence of a polymerization catalyst and/or of a photoinitiator.

2. Process according to Claim 1, in which the polyfluoro monomer(s) correspond(s) to the formula:

$$R_f - (CH_2)_p - O - \overset{\overset{\displaystyle O}{\|}}{C} - \underset{\underset{\displaystyle R}{|}}{C} = CH - R \qquad (III)$$

in which $R_f$ and R have the same meanings as in Claim 1 and p denotes an integer ranging from 1 to 20, preferably equal to 2 or 4.

3. Process according to Claim 2, in which a mixture of monomers of formula (III) containing different Rf radicals is employed.

4. Process according to one of Claims 1 to 3, in which $R_2$ is a methyl or ethyl radical.

5. Application of the fluorinated products obtained by a process according to one of Claims 1 to 4 to the oilproofing and to the waterproofing of various substrates, particularly leathers.

6. Materials and articles treated by means of a fluorinated product obtained by a process according to one of Claims 1 to 4.